# EUROPEAN PATENT APPLICATION

(11) **EP 1 993 229 A1**
(43) Date of publication of application: **19.11.2008**
(21) Application number: 08009015.2
(22) Date of filing: 15.05.2008
(51) Int. Cl.: H04L 12/18, H04L 12/56

(54) **Method, device and system for implementing multicast connection admission control**

(30) Priority: 15.05.2007 CN 200710074453; 28.03.2008 WO PCT/CN2008/070612
(71) Applicant: Huawei Technologies Co., Ltd., Shenzhen, Guangdong Province 518129 (CN)
(72) Inventor: Luo, Yong, Longgang District Shenzhen Guangdong Province 518129 (CN); Yue, Dongsheng, Longgang District Shenzhen Guangdong Province 518129 (CN); Zhang, Qun, Longgang District Shenzhen Guangdong Province 518129 (CN)
(74) Representative: Pfenning, Meinig & Partner GbR

(57) **Abstract**

A method and device for implementing multicast connection admission control is provided, and the method includes: calculating a currently remaining multicast support capability of a network-side functional unit upon receiving a program request initiated from a user; and admitting an access of the user when a support capability required for a program as requested by the user is below or equal to the currently remaining multicast support capability of the network-side functional unit.

## Description

This application claims priority to Chinese Patent Application No. 200710074453.9, entitled "Method and device for implementing multicast connection admission control" and filed with the Chinese Patent Office on May 15, 2007, and International Patent Application PCT/CN2008/070612, entitled "Method, device and system for implementing multicast connection admission control" and filed with the Chinese Patent Office on March 28, 2008, which are hereby incorporated by reference in its entirety.

### Field of the Invention

The present invention relates to the field of communication, and in particular to a method, device and system for implementing multicast connection admission control.

### Background of the Invention

The multicast Connection Admission Control (CAC) function can decide whether to admit establishment of a new connection or enabling of a customized service in view of connection resources of a functional unit, for example, a restriction on a service bandwidth of a physical port, the number of programs that a multicast user of the physical port can watch, the number of users within a Virtual Local Area Network (VLAN), a multicast bandwidth for a designated group of users, etc. The functional unit may be a port, a VLAN or a domain. The port may be a user-side port or a network-side port.

In an open network, a Network Service Provider (NSP) provides only network hardware resources but no service resource for an Internet Service Provider (ISP). Management and allocation of service resources is accomplished by the ISP. The NSP has to manage both user-side bandwidth resources and the bandwidth customized by the ISP.

An existing technical solution implements multicast CAC based on an uplink physical port.

1. A content provider can not be provided with a function of wholesale.

For example, an uplink physical port is in concurrent connection with a plurality of ISPs and it is impossible to customize a multicast bandwidth for each ISP.

2. It is complex to implement.

(1) The CAC implemented on the basis of "physical ports" may not be extended easily due to diversity of the physical ports and also may face with the problem of negotiation about the rate of a physical port.

(2) In an application of dual-homing and a ring network, bandwidth control at a physical port has to be transferred to another port, which may be complex to implement.

### Summary of the Invention

Embodiments of the invention solve the technical problem by providing a method, device and system for implementing multicast connection admission control to manage a network-side multicast bandwidth.

According to one embodiment, a method for implementing multicast connection admission control includes:
calculating a currently remaining multicast support capability of a network-side functional unit upon receiving a program request initiated from a user; and
admitting an access of the user when a support capability required for a program as requested by the user is below or equal to the currently remaining multicast support capability of the network-side functional unit.

An embodiment of the invention further provides a device for implementing multicast connection admission control including:
a configuration module adapted to set the maximum multicast support capability of a network-side functional unit;
a comparing module adapted to derive a currently remaining multicast support capability of the network-side functional unit from comparison with the maximum support capability; and
a control module adapted to admit an access of a user when a support capability required for a program as requested by the user is below or equal to the currently remaining multicast support capability of the network-side functional unit.

An embodiment of the invention further provides a digital subscriber line access multiplexer including:
a configuration module adapted to set the maximum multicast support capability of a network side, which is a multicast bandwidth threshold or the maximum number of multicast programs that can be admitted, based upon a virtual local area network;
a comparing module adapted to derive a currently remaining multicast support capability of the network side from comparison with the maximum support capability; and
a control module adapted to admit an access of a user when a support capability required for a program as requested by the user is below or equal to the currently remaining multicast support capability of the network side.

An embodiment of the invention further provides a Broadband Remote Access Server including:
a configuration module adapted to set the maximum multicast support capability of a network side, which is a multicast bandwidth threshold or the maximum number of multicast programs that can be admitted, based upon a user domain or a multicast bandwidth threshold or the maximum number of multicast programs that can be admitted, based upon a virtual local area network;
a comparing module adapted to derive a currently remaining multicast support capability of the network side from comparison with the maximum support capability; and
a control module adapted to admit an access of a user when a support capability required for a program as requested by the user is below or equal to the currently remaining multicast support capability of the network side.

An embodiment of the invention further provides a system for implementing multicast connection admission control including an access node and a network-side device, wherein the network-side device includes:
a configuration module adapted to set the maximum multicast support capability of the network-side functional unit;
a comparing module adapted to derive a currently remaining multicast support capability of the network-side functional unit from comparison with the maximum support capability; and
a control module adapted to admit an access of a user when a support capability required for a program as requested by the user is below or equal to the currently remaining multicast support capability of the network-side functional unit.

The embodiments of the invention determine whether the currently remaining support capability of the network-side functional unit is sufficient to support the program as requested by the user to implement network-side multicast bandwidth management with the following advantageous effects: (1) the network-side multicast bandwidth can be managed by a technical means to provide an NSP with wholesale; and (2) the multicast VLAN based CAC can be deployed conveniently in various networks at a low cost.

### Brief Description of the Drawings

Fig.1 is a schematic diagram of a flow of the method for implementing multicast connection admission control according to a first embodiment of the invention;

Fig.2 is a schematic diagram of implementing multicast CAC over a DSLAM according to a second embodiment of the invention;

Fig.3 is a schematic diagram of implementing multicast CAC over a Broadband Remote Access Server (BRAS) according to a third embodiment of the invention; and

Fig.4 is a schematic diagram of implementing multicast CAC in an dual-homing and ring network scenario according to a fourth embodiment of the invention.

### Detailed Description of the Invention

The invention is described in detail as follows with reference to the drawings.

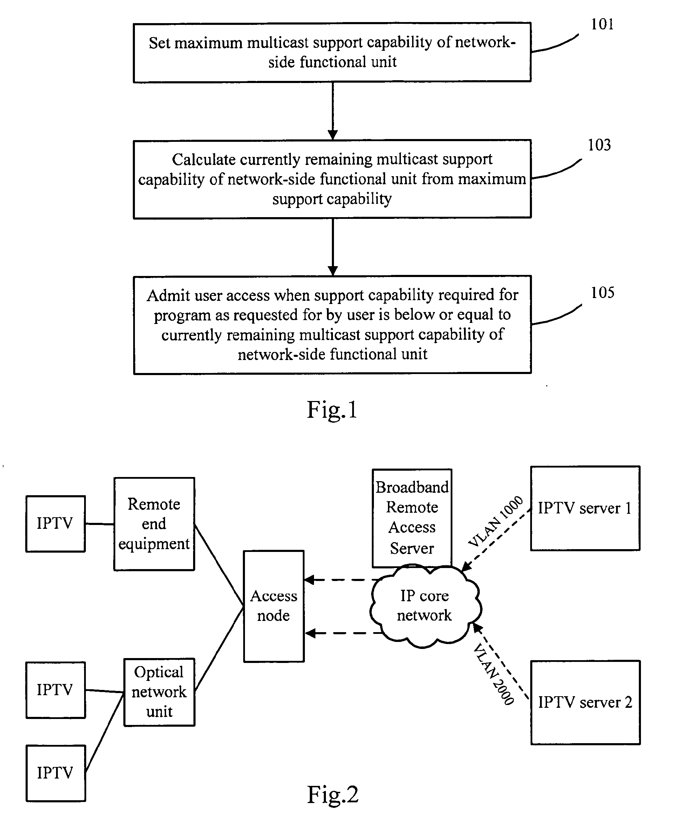

Referring to Fig.1, the method for implementing multicast connection admission control according to the first embodiment of the invention includes the following steps.

101: Set a maximum multicast support capability of a network-side functional unit.

In this embodiment, the maximum multicast support capability of the network-side functional unit includes a threshold of its bandwidth and the maximum number of admitted programs.

103: Receive a program request from a user and calculate remaining multicast support capability of the network-side functional unit from the maximum multicast support capability.

A required support capability is specified for each program when the program is configured at the network side, and therefore in the case that a program request initiated from a user is received, firstly an overall support capability for programs already activated at the network side at that time can be calculated and then compared with the maximum support capability set in the 101 to derive a remaining support capability, i.e. how many further programs can be supported.

105: Admit an access of the user when the support capability required for a program requested for by the user is below or equal to the currently remaining multicast support capability of the network-side functional unit.

Specifically, the embodiments of the invention implement a multicast CAC function based on a logic object (functional unit) and are illustrated respectively below.

Referring to Fig.2, the second embodiment of the invention implements multicast CAC on the basis of a VLAN over a Digital Subscriber Line Access Multiplier (DSLAM) mainly in the following two ways.

1. VLAN based bandwidth restriction

(1) A multicast bandwidth threshold of a multicast VLAN 1000, e.g. 300M, is set.

(2) The VLAN 1000 is configured with a program for which a bandwidth is specified, e.g. a program A with a multicast IP address of 225. 1. 1. 1 and a bandwidth of 2Mbps. When the user orders the program A of the VLAN 1000 for the first time, the DSLAM calculates and compares an overall bandwidth of programs already activated within the VLAN with the multicast bandwidth threshold, and the DSLAM can admit the user of ordering the program A if the difference accommodates the bandwidth of the program A, or the DSLAM will reject the user A.

(3) If the VLAN 1000 generates a program automatically, that is, automatically generates and deletes a multicast program within the VLAN 1000 in response to Internet Group Message Protocol (IGMP) joining and quitting messages of the user. When the program as requested by the user from the VLAN get activated for the first time, statistics are made for a real time traffic volume within the multicast VLAN by a specific statistic way such as an Access Control List (ACL), and the new program is not admitted of getting activated if the real time traffic volume is above the multicast bandwidth threshold.

2. Restriction on the number of VLAN based programs

(1) The number of multicast programs of the multicast VLAN 1000, e.g. 100, is set.

(2) More than 100 programs can be configured in the case of static configuring of the programs, but the user can be admitted of ordering the maximum number of 100 programs at a time. When the user orders the program A, the difference between the number of programs already activated within the VLAN and the total number is calculated, and the user can be admitted of ordering the program if the difference is above or equal to 1, or the user will be rejected otherwise.

(3) If the VLAN 1000 generates a program automatically, that is, automatically generates and deletes a multicast program within the VLAN 1000 in response to IGMP joining and quitting messages of the user. In the case that a joining message is received, if the program to get activated is new, it is determined whether the current number of programs within the VLAN reaches the upper limit, if the current number of programs within the VLAN does not reach the upper limit, the new program can be admitted of getting activated and the user can be admitted of ordering the program; otherwise, the joining request from the user will be reject.

According to this embodiment, the maximum multicast bandwidth or the maximum number of multicast programs for the functional element VLAN is set, then the bandwidth required for the ordered program or the new program to get activated is compared with the remaining bandwidth of the VLAN and the program is admitted of being ordered or getting activated if the remaining bandwidth can accommodate the bandwidth for the program, or the number of programs already activated within the VLAN is compared with the total number and the program is admitted of being ordered or getting activated if the difference is above or equal to one; or the user will be rejected otherwise.

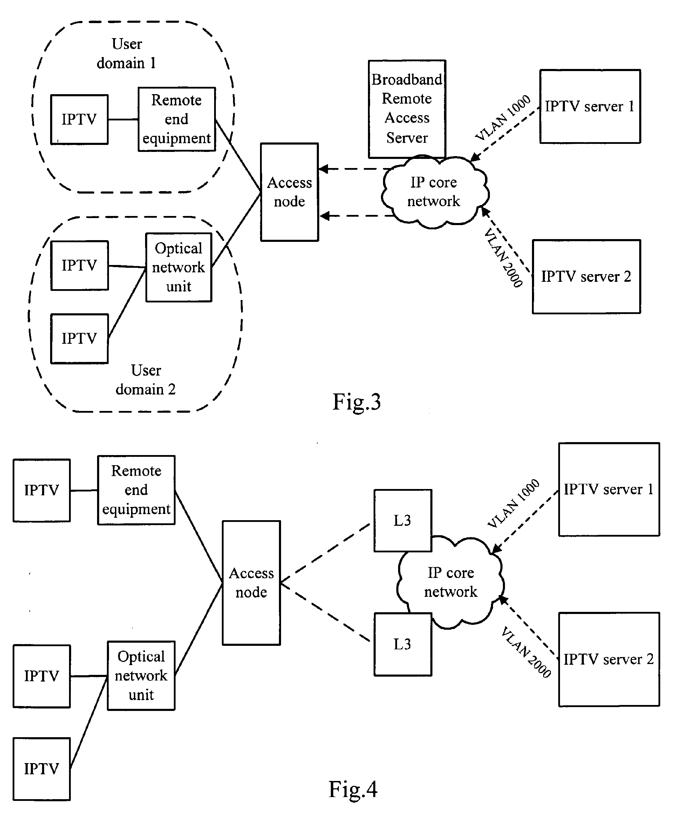

Further referring to Fig.3, the third embodiment of the invention implements multicast CAC over a BRAS, mainly in the following two ways:

1. The CAC is implemented based upon a user domain in steps analogous to those in the second embodiment over the DSLAM.

The BRAS can define a user domain by a user VLAN, a user IP address or a combination thereof.

(1) A multicast bandwidth or the number of programs in the domain where a user is located is set.

(2) When the user orders a program, the BRAS derives the domain where the user is located by a user identifier, for example, identifies the domain where the user is located by a VLAN or IP field in an IGMP request message from the user for ordering the program, and determines whether a remaining multicast bandwidth within the domain admits the new program of getting activated; or determines whether the remaining number of programs that can be supported is above or equal to 1, and if the remaining number of programs that can be supported is above or equal to 1, the BRAS admits the user; otherwise, the BRAS rejects the user.

2. The CAC is implemented on the basis of a network-side VLAN. Similarly to the implementation in the second embodiment over the DSLAM. In other words, the maximum multicast bandwidth or the maximum number of multicast programs for the VLAN is set, then a bandwidth required for an ordered program or a new program to get activated is compared with a remaining bandwidth of the VLAN and the program is admitted of being ordered or getting activated if the remaining bandwidth can accommodate the bandwidth for the program; or the number of programs already activated within the VLAN is compared with the total number and the program is admitted of being ordered or getting activated if the difference is above or equal to 1, or the user will be rejected otherwise.

Further referring to Fig.4, the fourth embodiment of the invention implements VLAN based CAC in a Multiple Spanning Tree Protocol (MSTP) ring network or dual-homing scenario. An Access Node (AN) is in uplink communication to a router or switch via two physical ports. L3 in Fig.4 denotes a layer-3 relay device, i.e. layer-3 switch.

The dual-homing scenario refers to that the AN is connected respectively with two devices via two physical ports of which the backup port is not provided with CAC data over the primary port and does not relay any multicast flow. Upon switching between the ports, the backup port becomes the primary port, and the existing CAC data over the original primary port shall be transferred to the new primary port; otherwise, a multicast request from a new user may be influenced.

Normally, one of the uplink ports for the AN stays in a backup status while only the other port stays in an operating status, and the primary and backup ports are located in the same VLAN. The port in the backup status is switched to the operating status when a multicast relay path for a higher-level device is switched or the current uplink port is down to ensure ceaseless relaying of a multicast flow. Steps for implementing CAC in the above scenario are analogous to those in the second embodiment over the DSLAM. Since this embodiment implements CAC based upon a VLAN, a complex bandwidth control transfer is not necessary here.

The principle of implementing CAC based upon a VLAN over an MSTP ring network is analogous to the above and requires no complex bandwidth control transfer.

The fifth embodiment of the invention provides a device for implementing multicast connection admission control including: a configuration module adapted to set the maximum multicast support capability of a network-side functional unit; a comparing module adapted to derive a currently remaining multicast support capability of the network-side functional unit from comparison with the maximum support capability; and a control module adapted to admit an access of a user when a support capability required for a program as requested by the user is below or equal to the currently remaining multicast support capability of the network-side functional unit.

The maximum multicast support capability of the network-side functional unit which is set by the configuration module includes a multicast bandwidth threshold of the network-side functional unit or the maximum number of multicast programs that the network-side functional unit admits.

The comparing module includes a statistic sub-module adapted to make statistics of an overall support capability obtained for currently activated programs and a calculating sub-module adapted to calculate the difference between the current overall support capability and the maximum support capability to derive the remaining support capability.

The network-side functional unit in this embodiment of the invention is a Virtual Local Area Network (VLAN).

The device for implementing multicast connection admission control according to this embodiment of the invention can be a DSLAM or BRAS, and a specific process thereof for implementing multicast CAC has been described in details previously and will not be detailed again.

An embodiment of the invention further provides a system for implementing multicast connection admission control including an access node and a network-side device, the network-side device can be the above device for implementing multicast connection admission control.

The embodiments of the invention determine whether the currently remaining support capability of the network-side functional unit is sufficient to support the program as requested by the user to implement network-side multicast bandwidth management. A VLAN is a logical control granularity and the multicast VLAN based CAC can be deployed conveniently in various networks at a low cost; and a finer control granularity can be provided by the VLAN over a physical port to provide wholesale for an ISP.

The above descriptions are merely illustrative of the preferred embodiments of the invention but not limitative to the scope of the invention. Any modifications, alternatives and adaptations made without departing from the spirit of the invention shall come into the scope of the invention as defined in the appended claims.

## Claims

1. A method for implementing multicast connection admission control, comprising:
calculating a currently remaining multicast support capability of a network-side functional unit upon receiving a program request initiated from a user; and
admitting an access of the user when a support capability required for a program requested by the user is below or equal to the currently remaining multicast support capability of the network-side functional unit.

2. The method according to claim 1, wherein the calculating of the currently remaining multicast support capability of the network-side functional unit comprises:
calculating an overall support capability obtained for currently activated programs of the network-side functional unit; and
comparing the current overall support capability with the preset maximum multicast support capability of the network-side functional unit to derive the difference thereof as the currently remaining support capability.

3. The method according to claim 1 or 2, wherein the network-side functional unit is a Virtual Local Area Network, VLAN.

4. The method according to claim 2, wherein the maximum multicast support capability of the network-side functional unit is a multicast bandwidth threshold.

5. The method according to claim 4, comprising:
the calculating of the currently remaining multicast support capability of the network-side functional unit comprises: making statistics of real time traffic volume within the multicast VLAN; and
the admitting of an access of the user when the support capability required for the program as requested by the user is below or equal to the currently remaining multicast support capability of the network-side functional unit comprises: allowing the program to be activated when the real time traffic volume is below or equal to the multicast bandwidth threshold.

6. The method according to claim 3, wherein the maximum multicast support capability of the network-side functional unit is the maximum number of multicast programs that can be admitted.

7. The method according to claim 6, wherein the calculating of the currently remaining multicast support capability of the network-side functional unit comprises:
making statistics of the current number of programs within the multicast VLAN; and
the admitting of an access of the user when the support capability required for the program as requested by the user is below or equal to the currently remaining multicast support capability of the network-side functional unit comprises: allowing the program to be activated when the result of making statistics of the current number of programs is below or equal to the maximum number of multicast programs that can be admitted.

8. A device for implementing multicast connection admission control, comprising:
a configuration module adapted to set the maximum multicast support capability of a network-side functional unit;
a comparing module adapted to derive a currently remaining multicast support capability of the network-side functional unit from comparing an overall support capability of currently activated programs of the network-side functional unit with the maximum multicast support capability; and
a control module adapted to admit an access of a user when a support capability required for a program requested by the user is below or equal to the currently remaining multicast support capability of the network-side functional unit.

9. The device according to claim 7, wherein the comparing module further comprises:
a statistic sub-module adapted to make statistics of an overall support capability obtained for currently activated programs; and
a calculating sub-module adapted to calculate the difference between the current overall support capability and the maximum support capability to derive the remaining support capability.

10. The device according to claim 8 or 9, wherein the network-side functional unit is a Virtual Local Area Network, VLAN.

11. A digital subscriber line access multiplexer, comprising:
a configuration module adapted to set the maximum multicast support capability of a network side, which is a multicast bandwidth threshold or the maximum number of multicast programs that can be admitted, based upon a virtual local area network;
a comparing module adapted to derive a currently remaining multicast support capability of the network side from comparing an overall support capability of currently activated programs of the network-side functional unit with the maximum multicast support capability; and
a control module adapted to admit an access of a user when a support capability required for a program requested by the user is below or equal to the currently remaining multicast support capability of the network side.

12. The digital subscriber line access multiplexer according to claim 11, wherein the comparing module further comprises:
a statistic sub-module adapted to make statistics of an overall support capability obtained for currently activated programs; and
a calculating sub-module adapted to calculate the difference between the result of making statistics of an overall support capability and the maximum multicast support capability to derive the remaining support capability.

13. A Broadband Remote Access Server, BRAS, comprising:
a configuration module adapted to set the maximum multicast support capability of a network side, which is a multicast bandwidth threshold or the maximum number of multicast programs that can be admitted, based upon a user domain or a multicast bandwidth threshold or the maximum number of multicast programs that can be admitted, based upon a virtual local area network;
a comparing module adapted to derive a currently remaining multicast support capability of the network side from comparing an overall support capability of currently activated programs of the network-side functional unit with the maximum multicast support capability; and
a control module adapted to admit an access of a user when a support capability required for a program requested by the user is below or equal to the currently remaining multicast support capability of the network side.

14. The Broadband Remote Access Server according to claim 13, wherein the comparing module further comprises:
a statistic sub-module adapted to make statistics of an overall support capability obtained for currently activated programs; and
a calculating sub-module adapted to calculate the difference between the result of making statistics of an overall support capability and the maximum multicast support capability to derive the remaining support capability.

15. A system for implementing multicast connection access control, comprising an access node and a network-side device, wherein the network-side device comprises:
a configuration module adapted to set the maximum multicast support capability of the network-side functional unit;
a comparing module adapted to derive a currently remaining multicast support capability of the network-side functional unit from comparing an overall support capability of currently activated programs of the network-side functional unit with the maximum multicast support capability; and
a control module adapted to admit an access of a user when a support capability required for a program requested by the user is below or equal to the currently remaining multicast support capability of the network-side functional unit.

16. The system according to claim 15, wherein the comparing module further comprises:
a statistic sub-module adapted to make statistics of an overall support capability obtained for currently activated programs; and
a calculating sub-module adapted to calculate the difference between the result of making statistics of an overall support capability and the maximum multicast support capability to derive the remaining support capability.
